# EUROPEAN PATENT SPECIFICATION

(11) **EP 0 444 336 B1**
(45) Date of publication and mention of the grant of the patent: **06.07.1994**
(21) Application number: 90302128.5
(22) Date of filing: 28.02.1990
(51) Int. Cl.: B01D 59/34, H01S 3/09

(54) **Laserisotope separation apparatus**
Vorrichtung zur Laserisotopentrennung
Appareil de séparation isotopique par laser

(43) Date of publication of application: 04.09.1991
(73) Proprietor: DORYOKURO KAKUNENRYO KAIHATSU JIGYODAN, Minato-ku Tokyo 107 (JP)
(72) Inventor: Sasao, Nobuyuki, c/o Doryokuro Kakunenryo Kaihatsu, Tokai-mura, Naka-gun, Ibaraki 319-11 (JP); Yamaguchi, Hiromi, c/o Doryokuro Kakun. Kaihatsu, Tokai-mura, Naka-gun, Ibaraki 319-11 (JP)
(74) Representative: Bubb, Antony John Allen

(56) References cited:
- EP-A- 0 320 386
- FR-A- 2 315 310
- US-A- 4 634 864

## Description

The present invention relates to a separation apparatus of the isotopes with different mass numbers, and more particularly to a laser isotope separation apparatus.

For example, natural palladium contains the isotopes with mass numbers 102 (1%), 104 (11%), 105 (22.2%), 106 (27.3%), 108 (26.7) and 110 (11.8%). The palladium in the insoluble residue from the reprocessing of spent fuel contains the isotopes of the mass number 107 by 18%, for example, in addition to the isotopes of the above mass numbers. There is strong demand on the effective method to selectively separate the isotopes of platinum group elements. (For example, only the palladium with mass number 107 is radioactive, and if this can be selectively removed, the palladium in the insoluble residue from the reprocessing of spent fuel can be effectively utilized as valuable resources.) Laser isotope separation method is known as a means to separate isotopes. By this method, the substance containing isotopes is gasified, and linearly-polarized laser light is applied to selectively excite only the desired isotopes by isotope shift. Further, laser beam is applied on the atoms selectively excited, and the ionized atoms are separated from the other neutral isotopes by means of the electrode applied with electric field or magnetic field.

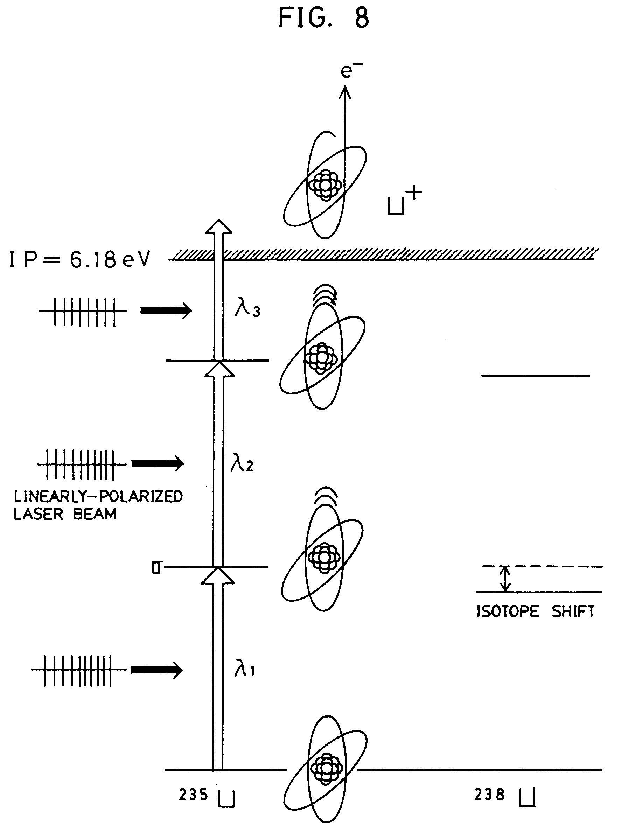

Taking an example in uranium, the principle of the conventional laser isotope separation method is described below. In the schematical illustration of Fig. 8, when linearly-polarized laser light of λ₁ (∼ 591 nm) is applied to the uraniums 235 and 238 on ground level, only uranium 235 absorbs light because of the isotope shift (280 milli cm⁻¹) and is excited to the first excited level, while uranium 238 does not absorb light and is not excited. When the linearly-polarized laser light of λ₂ (∼ 563 nm) is applied on uranium 235, it is excited from the above excited level to the intermediate excited level. It is further excited to higher than the ionized potential (I.P.) by the third light (λ₃ = ∼ 625 nm) and is ionized. On the other hand, uranium 238 is not excited at all. Accordingly, in the gas containing ionized uranium 235 and neutral uranium 238, the former can be separated from the latter by means of the electrode applied with electric field or magnetic field.

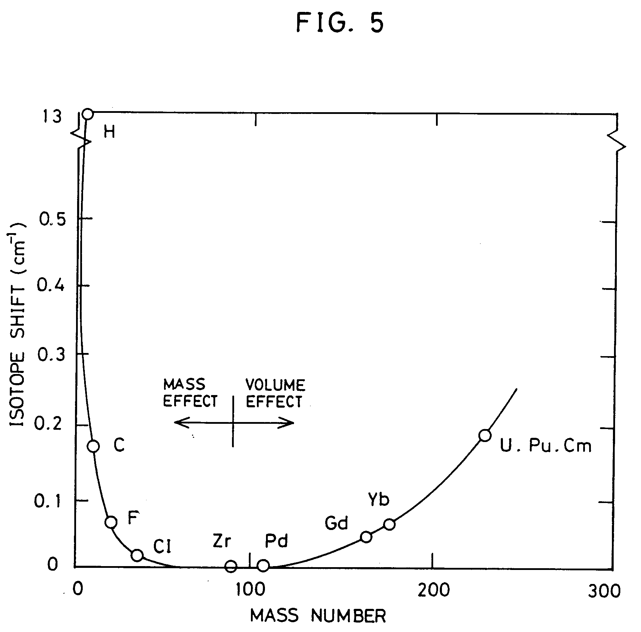

Meanwhile it is known that the isotope shift depends upon the mass number of the element as shown in the graph of Fig.5. From the mass number of about 100 up, isotope shift increases with the increase of mass number due to volume effect of atoms, while the isotope shift increases due to mass effect of atoms when the mass number decreases. As it is evident from this graph, the isotope shift is very small near the palladium with mass number of 102 to 110. Actually, it is about 8 milli cm⁻¹. In contrast, the line width of laser light is about 30 milli cm⁻¹. Thus, when the method of Fig. 8 is applied on the element with mass number of about 100, the isotopes cannot be selectively excited because the isotope shift is smaller than the line width of laser light.

A method and apparatus for the selective excitation and separation of isotopes is described in FR-A-2315310 which discloses a laser isotope separation apparatus, comprising gasification means for gasifying a substance containing isotopes, light pumping means for pumping at least two different lasers,
first excitation means providing irradiated laser light of a first wavelength, for exciting the isotopes to a first excited level,
second excitation means providing irradiated laser light of a second wavelength, for exciting the isotopes at the first excited level to a second excited level,
first and second circular polarization-convertors, wherein the laser light of said first wavelength is converted to circularly polarized light having a first optical path by said first circular polarization convertor, and said laser light of said second wavelength having a second optical path is converted to circularly polarized light by said first circular polarization convertor,
optical circuit means for delaying said circularly polarized laser light in at least one of said first and second optical paths such that said first and second optical paths are made to be the same length, and
separation means for separating ionized isotopes from neutral isotopes, said separation means including electrodes applied with an electromagnetic field. It is not possible however to perform isotope separation of all elements by the apparatus of FR-A-2315530 as there is a limitation on the the wavelength to be oscillated, even when all types of laser now available are used. Furthermore because Doppler shift is not reduced to zero by the apparatus of FR-A-2315530 the isotope separation efficiency remains low.

US-A-4634864 describes a method for measuring isotope abundance ratios in which a pair of lasers are used to selectively cause ionisation of atoms. A third wavelength may be used to further ionise an already ionised set of atoms to a double ionised state.

Therefore, it is the object of this invention to provide a new isotope separation apparatus, which eliminates the disadvantages of the conventional laser isotope separation method and apparatus as described above. More particularly, it is to provide a laser isotope separation apparatus for the isotope, in which isotope shift is equal to or smaller than the line width of laser light.

To attain such an object, according to the invention the laser isotope separation apparatus referred to above is characterized in that it includes, for use in separating isotopes in which the isotope shift is equal to or smaller than the line width of laser light,
ionization means providing irradiated laser light of a third wavelength to ionize selected isotopes at the second excited level,
wave conversion means for producing a non-linear optical effect for converting wavelength of light from at least one of said lasers, and
means for providing that said first circularly polarized laser light and second circularly polarized laser light are irradiated on said gasified substance from opposite directions.

This apparatus is preferably arranged in such a manner that the ionisation means includes a third laser pumped by the said light pumping means.

In case the isotopes with different mass numbers in the isotopes to be separated are further separated, the apparatus further includes a further ring dye laser, having a line width narrower than an isotope shift between those isotopes contained in said substance such that light from the said ring dye laser is amplified by one of said two or more lasers and this light is used as the laser light with said first or said second wavelength by converting or without converting the wavelength by non-linear optical effect whereby the said isotopes with different mass numbers are separated.

The apparatus can be arranged in such a manner that that the substance containing isotopes is palladium and the laser light with the second wavelength also serves as the laser light with the third wavelength, and that the light pumping means is a pulse operating YAG laser emitting the light with wavelength of 1064 nm, whereby the first laser is pumped by converting the wavelength to 1/2, i.e. to 532 nm, by non-linear optical element, the light with wavelength of 552.6 nm is oscillated from the first laser and this light is used as the laser light with the first wavelength by converting the light to 1/2 of the wavelength, i.e. to 276.3 nm, by non-linear optical effect, the second laser is pumped by converting the laser light from said pulse operating YAG laser to 1/3 of the wavelength, i.e. to 355 nm, by non-linear optical element, and the light with wavelength of 521 nm is oscillated from the second laser and the light is used as the laser light with the second and third wavelengths.

The laser isotope separation apparatus according to this invention can also be applied in the cases where the substance containing isotopes is Mg, Ca, Zn, Sr, Cd, Ba, Hg, Yb, C, Ge, Sn, Sm, Pb, Pu.

The laser isotope separation apparatus according to this invention utilizes the circularly-polarized light to selectively excite the isotopes to the first or the second excited level. Even in case of the isotope, in which the isotope shift is equal to or smaller than the line width of the laser light, it can be selectively ionized and separated because there are the isotopes abosorbing the circularly-polarized light based on the angular momentum selection rule and being excited and the isotopes not excited according to the mass number of isotopes (or those having nuclear spin not equal to zero and equal to zero). The selective excitation by the angular momentum selection rule and the ionization are performed by 3 steps of excitation. Three excitation wavelengths are generated from two or more lasers pumped by the light from the same pumping light source, and the optical paths of these light beams are made to be in same length by optical delay circuit. Accordingly, even when the laser light source is pulse-operating, selective excitation and ionization can be performed. Also, because the first circularly-polarized laser light and the second circularly-polarized laser light are irradiated on the substance containing the gasified isotopes from opposite directions, Doppler effects of the moving atoms can be canceled each other vector-wise, and the separation efficiency is increased. It is not necessary to optically overlap both light beams in advance, and the circularly-polarized light can be efficiently utilized.

### BRIEF DESCRIPTION OF THE DRAWINGS

Fig. 1 is a diagram to show the optical path of the Embodiment 1 of the laser isotope separation apparatus according to the present invention;
Fig. 2 is a drawing to explain the excited level of palladium isotopes and its angular momentum selection rule;
Fig. 3 is a schematical illustration of the laser isotope separation method of palladium to explain the principle of this invention;
Fig. 4 shows the results of separation of natural palladium isotopes by the laser isotope separation apparatus of Fig. 1;
Fig. 5 is a diagram to show the relationship between the isotope shift of the elements and the mass number;
Fig. 6 and Fig. 7 are the variants of the optical path of Fig. 1;
Fig. 8 is a schematical illustration of the conventional laser isotope separation method of uranium.

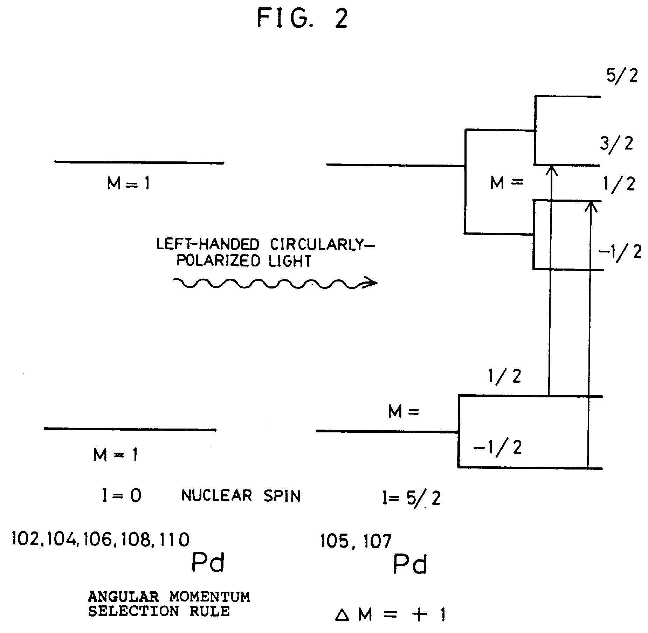

Before explaining the embodiments of this invention, the principle of the isotope separation of the laser isotope separation apparatus according to this invention is described. The principle used in this invention is the laser isotope separation method utilizing the angular momentum selection-rule, and it is based on the angular momentum selection rule of the atoms to the absorption of the circularly-polarized light. For example, if palladium is taken as an example, in Fig. 2 where the status of angular momentum quantum number on its energy level is schematically illustrated, nuclear spin I is zero in the palladiums having even mass numbers 102, 104, 106, 108 and 110. Accordingly, there is no hyperfine structure at energy level. The total angular momentum quantum number M at the first intermediate excited level is 1, and total angular momentum quantum number M at the second intermediate excited level is also 1. Between these levels, transition does not occur when the circularly-polarized light enters. Namely, it is known from the angular momentum selection rule that transition occurs only between the energy level where the variation ΔM of total angular momentum quantum number when the left-handed circularly-polarized light enters is +1 and the variation ΔM of total angular momentum quantum number when the right-handed circularly-polarized light enters is -1. However, because there is no variation of total angular momentum quantum number between the levels of M = 1 and M = 1, no excitation occurs by absorbing the circularly-polarized light. On the other hand, nuclear spin I is 5/2 and is not zero in palladiums having odd mass number of 105 and 107. Therefore, nuclear spin exerts influence on energy condition of the atoms, and the complicated hyperfine structure as shown is generated on energy level. When left-handed circularly-polarized light enters, the variation ΔM = +1 of total angular momentum quantum number occurs between the levels shown by arrow in the figures. Transition occurs and it is excited. Therefore, by irradiating the left-handed circularly-polarized light to the gas containing the palladiums 102, 104, 105, 106, 107, 108 and 110, the palladium 105 and 107 can be selectively ionized, and the ionized isotopes can be separated by the electrode applied with electric field or magnetic field.

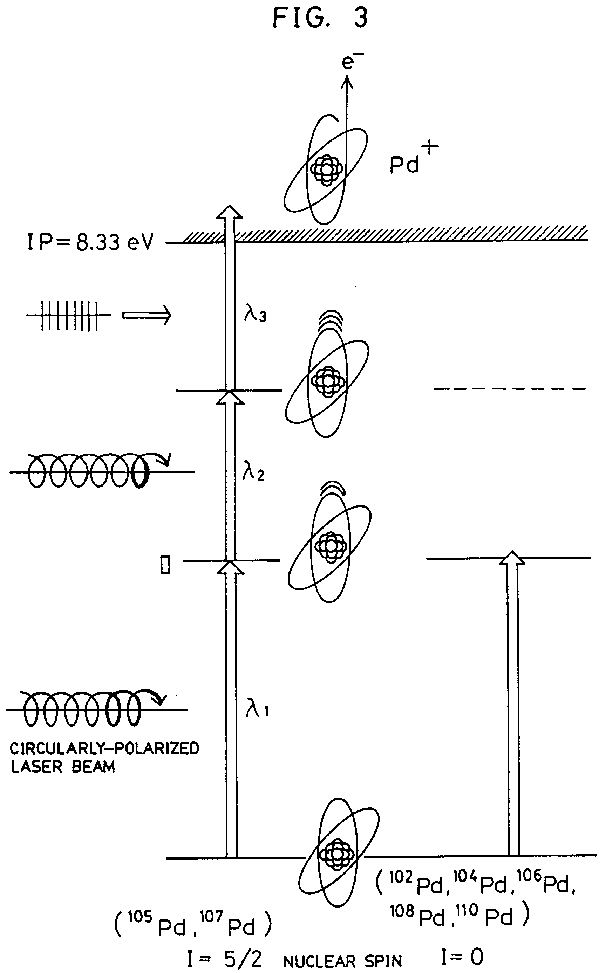

The laser isotope separation method of palladium according to the above principle is as schematically given in Fig. 3. Namely, when the laser light for the first selective excitation of the left-handed circularly-polarized light having wavelength λ₁ (∼ 276 nm) is applied to the palladium group having odd mass numbers of 105 and 107 at ground level and to the palladium groups having even mass numbers of 102, 104 106, 108 and 110, all atoms of two groups are excited to the first excited level. When the laser light for the second selective excitation of the left-handed circularly-polarized light having wavelength λ₂ (∼ 521 nm) is applied to the atoms of these two groups thus excited, only the group with odd mass numbers absorbs the light according to the principle of Fig. 2 and is excited to the intermediate excited level, and the palladium group with even mass number does not absorb the light and is not excited to the intermediate excited level. Further, the laser light for ionization of the left-handed circularly-polarized light of λ₃ (∼ 521 nm) (which is not necessarily the circularly-polarized light) is applied to the palladium group having odd mass number, and it is excited to higher than the ionization potential (I.P.) and ionized. On the other hand, the palladium group with even mass number is not excited. Thus, in the gas containing the ionized palladiums 105 and 107 and also neutral palladiums of 102, 104, 106, 108 and 110, the former can be separated from the latter by the electrode applied with electric field or magnetic field.

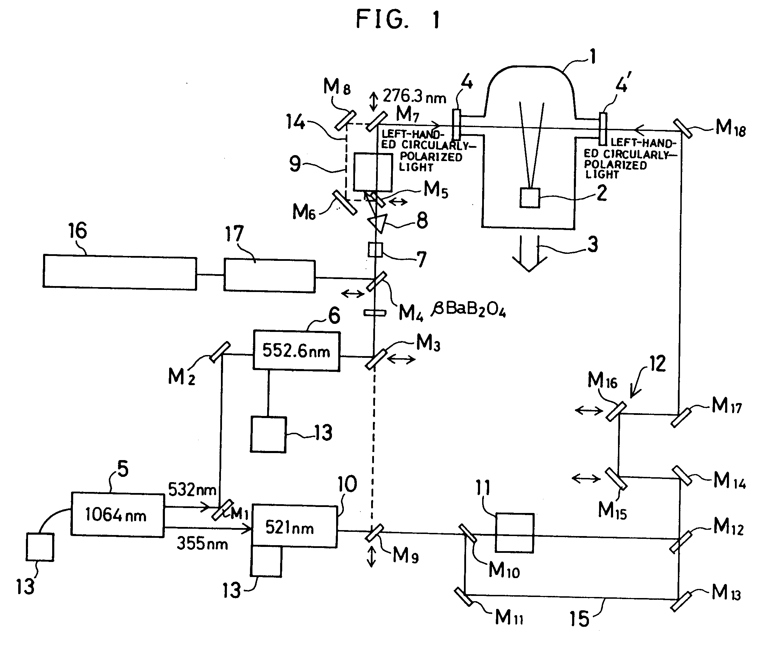

Fig. 1 shows an optical path of the Embodiment 1 of the laser isotope separation apparatus according to this invention to execute the laser palladium isotope separation method of Fig. 3. This apparatus primarily consists of vacuum chamber 1, crucible 2, exhaust apparatus 3, entrance window 4, YAG laser 5, dye laser 6, second higher harmonics generating crystal 7, circularly-polarized light generator 9, dye laser 10, circularly-polarized light generator 11, and optical delay circuit 12. Natural palladium specimen or the palladium specimen collected from the insoluble residue of the reprocessing of spent fuel is placed into a crucible 2 in a vacuum chamber 1, and the vacuum chamber 1 is turned to vacuum by the exhaust apparatus 3. Electron beam is applied on the specimen obliquely from above by an electron gun (not shown), and palladium vapor is generated inside the vacuum chamber 1. In the vacuum chamber 1, the entrance windows 4 and 4' are provided at the opposite positions to let the laser light enter. As described later, the circularly-polarized light is introduced through the entrance windows 4 and 4', and these windows 4 and 4' are arranged at an angle of 80° to the entering direction of the laser light in order to introduce the circularly-polarized light efficiently into the vacuum chamber 1. Laser light is generated by synchronizing the laser light for the first selective excitation and the laser light for the second selective excitation through pumping of the dye lasers 6 and 10 by the pulse operating YAG laser 5 for pumping. First, to generate the laser light with wavelength λ₁ of Fig. 3, the light with wavelength 1064 nm coming from YAG laser 5 is turned to the light with 1/2 of the wavelength, i.e. 532 nm, by non-linear optical element (not shown). Pumping the dye laser 6 by this light, the light with wavelength 552.6 nm is emitted. This light is further applied on the second higher harmonics generating crystal 7, and the light having 1/2 of the wavelength, i.e. 276.3 nm (λ₁) is emitted. The light with unnecessary wavelength is removed by spectral prism 8, and it is turned to the left-handed circularly-polarized light by the circulary-polarized light generator 9 comprising 1/4 wave plate. This is irradiated on the specimen vapor through the entrance window 4 as the laser light for the first selective excitation and it is excited to the first intermediate excited level. To generate the laser light with wavelength of λ₁ of Fig. 3, the light with wavelength 1064 nm coming from YAG laser is turned to 1/3 of the wavelength, i.e. to 355 nm, by non-linear optical element (not shown). (Frequency is tripled.) After pumping dye laser 10 by this light, the light with wavelength 521 nm is emitted. This light is turned to the left-handed circularly-polarized light by the circularly-polarized light generator 11 comprising 1/4 wave plate. Passing through the optical delay 12 consisting of the reflecting mirrors M₁₄ - M₁₇ with M₁₅ and M₁₆ adjustable to the arrow directions, the optical path is aligned to irradiate the specimen at the same time with the laser light for the first selective excitation (λ₁). (It is necessary to bring to the higher excitation status while it is excited.) It is then irradiated on the specimen vapor as the laser light for the second selective excitation through the entrance window 4', and only the palladiums having odd mass numbers of 105 and 107 are selectively excited to the second intermediate excited level. The laser light with this wavelength λ₂ also serves as the laser light for ionization with wavelength λ₃ of Fig. 3. Palladiums with odd mass number excited to the second intermediate excited level are ionized at the same time following to this excitation. The ionized palladiums having mass numbers of 105 and 107 are separated from the non-ionized palladiums with even odd mass numbers by the electrode (not shown) applied with electric field or magnetic field.

The optical path with wavelength λ₂ passing through the removable reflecting mirrors M₈ and M₇ is an experimental optical path to let the laser light for the second selective excitation from the same direction as the laser light for the first selective excitation with wavelength λ₁, and it is not necessarily required. When the laser light for the first selective excitation and the laser light for the second selective excitation are irradiated from the same direction by selecting such optical path, Doppler effect of the moving atoms works vector-wise, and the separation efficiency is decreased. However, the laser light for the first selective excitation and the laser light for the second selective excitation are irradiated from entirely opposite directions, as in the case of the present invention. Doppler effects of the moving atoms can be canceled each other vector-wise,and the separation efficiency is increased. If the laser light for the first selective excitation and the laser light for the second selective excitation are irradiated from the opposite directions, it is very advantageous because there is no need to optically overlap both light beams in advance. It is practically impossible to overlap two circularly-polarized light beams efficiently without loss and without giving influence on the polarization condition, whereas such problem can be solved by the arrangement according to this invention. It is preferable to irradiate the laser light for the first selective excitation and the laser light for the second selective excitation at the crossing angle of 0°, i.e. perfectly coaxially from the opposite directions, but it is necessary to adjust so that the crossing angle is 1° or less.

In Fig. 1, the bypass optical path 15 passing through the semi-transparent mirror M₁₀, the fixed reflecting mirrors M₁₁ and and M₁₃ and the semi-transparent mirror M₁₂ is used when the laser light (λ₃) for ionization is irradiated without circularly-polarizing, and this optical path is not necessarily required. Further, the optical path consisting of argon ion laser 16, ring dye laser 17, removable reflecting mirrors M₄ and M₅, and the fixed reflecting mirrors M₆ and M₈ is for the experiment to study hyperfine structure on the excited level of Fig. 2, and this is not necessarily required. In the figure, M₁, M₂, M₃ and M₁₆ are the fixed or the removable reflecting mirrors, and the control unit of each laser is denoted by the number 13.

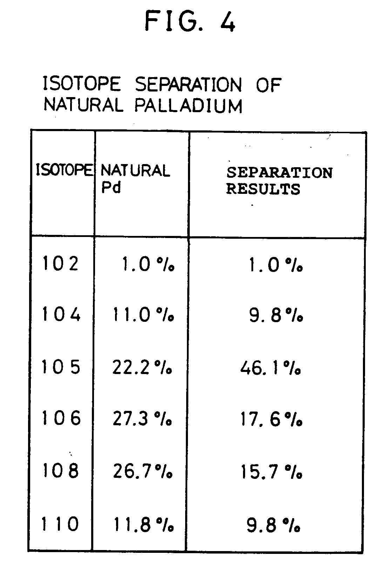

Fig. 4 shows the results of the separation of natural palladium isotopes by such laser separation apparatus. The conditions for the separation are as follows:
The volume of palladium crucible was 3 cc, the emission current of the heating electron gun was 100 mA, and the evaporation surface temperature was 1850°K. The vapor of palladium was made parallel by passing through collimator hole of 5 mm x 20 mm. Atom density at the portion irradiated by laser light was 6.3 x 10⁹ atoms/cm³. Further, the laser light with wavelength λ₁ had wavelength of 276.3 nm, pulse width of 10 nsec, iteration of 10 Hz, beam diameter of 3 mm, and power density of 64 W/cm³. The laser light with wavelength λ₂ had wavelength of 521 nm, pulse width of 10 nsec, iteration of 10 Hz, beam diameter of 3 mm, and power density of 375 kW/cm³.

As it is evident from Fig. 4, the concentration of palladium 105 (Palladium 107 does not exist in nature.) is extremely increased. By repeating this separation procedure, the concentration of palladium 105 is further increased.

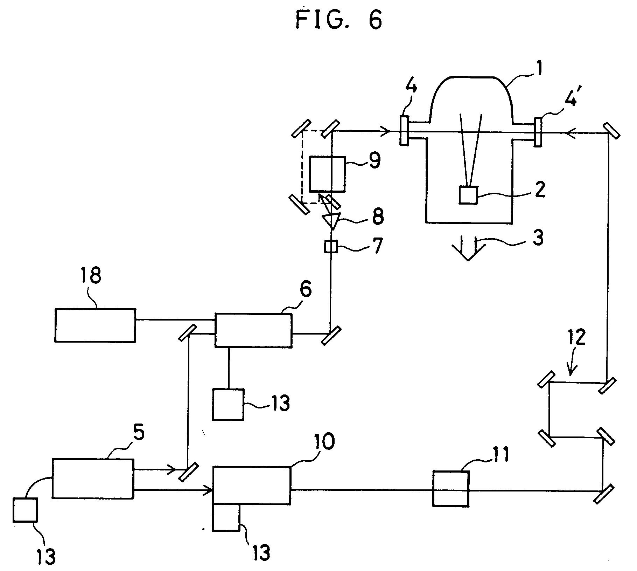

It is necessary in the apparatus of Fig. 1 to separate palladium 105 and 107 from each other, which are contained in the palladium collected from insoluble residue of the reprocessing of spent fuel. The isotope shift between these isotopes is about 8 milli cm⁻¹. On the other hand, the line width of the ring dye laser excited by argon ion laser is about 1 milli cm⁻¹, and this is narrower than the above isotope shift. Thus, it is possible to selectively excite only palladium 107 from the palladiums 105 and 107 having nuclear spin not at zero. Therefore, if ring dye laser 18 excited by argon ion laser is added to the apparatus of Fig. 1 as shown in Fig. 6 and the light from this ring dye laser 18 is irradiated to the dye laser 6 as seed light, the light from the ring dye laser 18 is amplified. Because YAG laser 5 is oscillating pulse-wise and is pumping the dye laser 6, the light amplified by the dye laser 6 is pulsed. This light is then converted to the left-handed circularly-polarized light by the circularly-polarized light generator 9. By this light, palladium 107 can be selectively excited, and it is possible to efficiently separate palladium 105 from palladium 107.

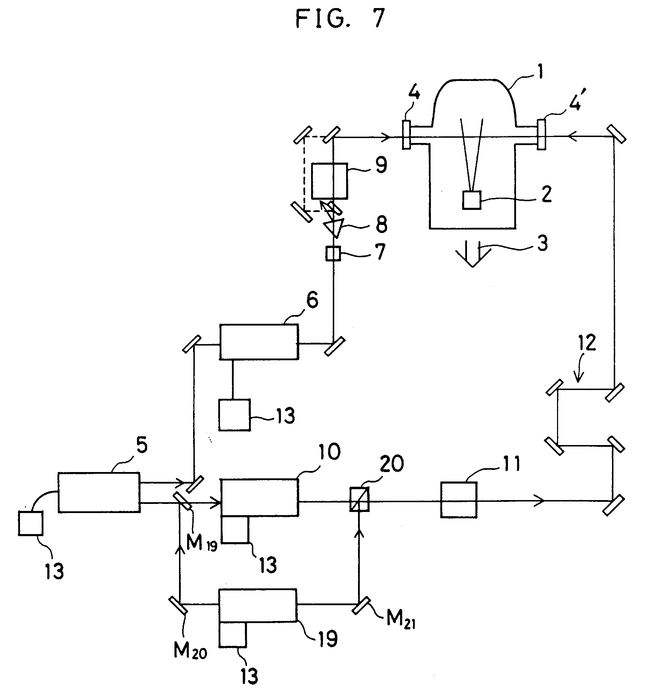

In the apparatus of Fig. 1, 2-wavelength 3-step system is adopted where the laser light with the second wavelength also serves the laser light for ionization. In some cases, ionization efficiency is decreased in this system. In such case, the third laser 19 for ionization should be added as shown in Fig. 7. By pumping the third laser 19 through the pulse operating laser 5 for pumping, the laser light for ionization can be generated, in wavelength and intensity, independently from and in synchronization with the laser light with the second wavelength. In this case, the laser light for ionisation does not have to be the circularly-polarized light. Before the laser light with the second wavelength and the laser light for ionization enter the circularly-polarized light generator 11, the linearily-polarized lights of both lights are bonded together with the polarization plane varying by 90° from each other by polarization beam coupler 20. Then, only the laser light with the second wavelength should be converted to the circularly-polarized light by passing through the circularly-polarized light generator 11. (1/4 wave plate of the circularly-polarized light generator 11 can convert only one of two wavelengths to the circularly-polarized light if two wavelengths are separated from each other.) In the figure, M₁₉ is a fixed semi-transparent mirror, and M₂₀ and M₂₁ are the fixed reflecting mirrors.

In the above, description has been given on the laser isotope separation apparatus according to this invention where the isotopes of palladium with nuclear spin not at zero are separated from the other isotopes, whereas this apparatus can be applied for the separation of the isotopes of the elements other than palladium with nuclear spin not at zero such as Mg, Ca, Zn, Sr, Cd, Ba, Hg, Yb, C, Si, Ge, Sn, Sm, Pb, Pu, etc. from the other isotopes.

As described already, the laser isotope separation apparatus based on this invention utilizes the circularly-polarized light to selectively excite the isotopes to the first or the second excited level. Because there are the isotopes absorbing the circularly-polarized light and excited according to the angular momentum selection rule of quantum mechanics and those isotopes not absorbing and not excited depending upon the mass number of the isotopes, it is possible by the present invention to selectively ionize and separate the isotopes, which have the isotope shift equal to or smaller than the line width of the laser light and which have been difficult to separate in the past. The selective excitation and ionization according to the angular momentum selection rule are carried out by 3-step excitation, and 3 excited wavelengths are generated by two or more lasers pumped by the light from the same pumping light source. Also, the optical paths for these lights are made to be in same length by optical delay circuit. Thus, it is possible to perform selective excitation and ionization even when laser light source is pulse operating. Because the laser light of the first circularly-polarized light and the laser light of the second circularly-polarized light are irradiated from opposite directions on the substance containing the gasified isotopes, Doppler effects of the moving atoms can be canceled each other vector-wise, and the separation efficiency is increased. There is no need to optically overlap both lights in advance, and the laser light circularly-polarized with high efficiency can be utilized.

The present invention is particularly effective for the separation and purification of palladium. In the practical application, the only radioactive palladium isotope with mass number 107 can be separated from the palladium contained in the insoluble residue from the reprocessing of spent fuel, and the non-radioactive palladium with even mass number, which has been handled as waste in the past, can be separated and utilized as precious metal.

## Claims

1. A laser isotope separation apparatus, comprising:
gasification means for gasifying a substance containing isotopes, light pumping means (5) for pumping at least two different lasers (6, 10),
first excitation means (6) providing irradiated laser light of a first wavelength, for exciting the isotopes to a first excited level,
second excitation means (10) providing irradiated laser light of a second wavelength, for exciting the isotopes at the first excited level to a second excited level,
first and second circular polarization-convertors (9, 11), wherein the laser light of said first wavelength is converted to circularly polarized light having a first optical path by said first circular polarization convertor, and said laser light of said second wavelength having a second optical path is converted to circularly polarized light by said first circular polarization convertor,
optical circuit means (12) for delaying said circularly polarized laser light in at least one of said first and second optical paths such that said first and second optical paths are made to be the same length,
separation means for separating ionized isotopes from neutral isotopes, said separation means including electrodes applied with an electromagnetic field,
characterized in that it includes, for use in separating isotopes in which the isotope shift is equal to or smaller than the line width of laser light,
ionization means providing irradiated laser light of a third wavelength to ionize selected isotopes at the second excited level,
wave conversion means for producing a non-linear optical effect for converting wavelength of light from at least one of said lasers (6, 10), and
means for providing that said first circularly polarized laser light and second circularly polarized laser light are irradiated on said gasified substance from opposite directions.

2. A laser isotope separation apparatus as claimed in Claim 1, characterised in that the ionisation means includes a third laser pumped by the said light pumping means.

3. A laser isotope separation apparatus as claimed in Claim 1 or Claim 2, characterised in that it includes a further ring dye laser, having a line width narrower than an isotope shift between those isotopes contained in said substance such that light from the said ring dye laser is amplified by one of said two or more lasers and this light is used as the laser light with said first or said second wavelength by converting or without converting the wavelength by non-linear optical effect whereby the said isotopes with different mass numbers are separated.

4. A laser isotope separation apparatus as claimed in one of Claims 1 to 2, characterised in that the substance containing isotopes is palladium and the laser light with the second wavelength also serves as the laser light with the third wavelength.

5. A laser isotope separation apparatus as claimed in Claim 4, characterised in that the light pumping means is a pulse operating YAG laser emitting the light with wavelength of 1064 nm, whereby the first laser is pumped by converting the wavelength to 1/2, i.e. to 532 nm, by non-linear optical element, the light with wavelength of 552.6 nm is oscillated from the first laser and this light is used as the laser light with the first wavelength by converting the light to 1/2 of the wavelength, i.e. to 276.3 nm, by non-linear optical effect, the second laser is pumped by converting the laser light from said pulse operating YAG laser to 1/3 of the wavelength, i.e. to 355 nm, by non-linear optical element, and the light with wavelength of 521 nm is oscillated from the second laser and the light is used as the laser light with the second and third wavelengths.

6. A laser isotope separation apparatus as set forth in one of Claims 1 to 3, wherein the substance containing isotopes is Mg, Ca, Zn, Sr, Cd, Ba, Hg, Yb, C, Ge, Sn, Sm, Pb, Pu.

## Patentansprüche

1. Vorrichtung zur Laserisotopentrennung, umfassend:
Gaserzeugungsmittel zum Vergasen einer Isotope enthaltenden Substanz, Lichtpumpmittel (5) zum Pumpen von wenigstens zwei verschiedenen Lasern (6, 10),
ein erstes Anregungsmittel (6) zur Erzeugung ausgestrahlten Laserlichts einer ersten Wellenlänge zur Anregung der Isotope auf ein erstes Anregungsniveau,
ein zweites Anregungsmittel (10) zur Erzeugung ausgestrahlen Laserlichts einer zweiten Wellenlänge zur Anregung der Isotope auf dem ersten Anregungsniveau auf ein zweites Anregungsniveau,
erste und zweite Zirkularpolarisationskonverter (9, 11), worin das Laserlicht der ersten Wellenlänge in zirkularpolarisiertes Licht mit einem ersten optischen Pfad durch den ersten Zirkularpolarisationskonverter konvertiert wird, und worin das Laserlicht der zweiten Wellenlänge in zirkularpolarisiertes Licht mit einem zweiten optischen Pfad durch den ersten Zirkularpolarisationskonverter konvertiert wird,
optische Leitungsmittel (12) zum Verzögern des zirkularpolarisierten Laserlichtes in wenigstens einem der ersten und zweiten optischen Pfade derart, daß der erste und zweite optische Pfad in ihrer Länge gleichgerichtet werden,
Trennungsmittel zum Trennen ionisierter Isotope von neutralen Isotopen, wobei die Trennungsmittel Elektroden mit einem angelegten elektromagnetischen Feld umfassen,
dadurch gekennzeichnet, daß sie für die Verwendung beim Trennen von Isotopen mit einer Isotopieverschiebung gleich oder kleiner als die Linienbreite des Laserlichtes ein Ionisationsmittel umfaßt, das ein ausgestrahltes Laserlicht einer dritten Wellenlänge erzeugt, um ausgewählte Isotope auf dem zweiten Anregungsniveau zu ionisieren,
Wellenumwandlungsmittel zum Erzeugen eines nichtlinearen optischen Effektes zum Konvertieren der Wellenlänge des Lichtes von wenigstens einem der Laser (6, 10) und
Mittel um dafür zu sorgen, daß das erste zirkularpolarisierte Laserlicht und das zweite zirkularpolarisierte Laserlicht auf die vergaste Substanz aus entgegengesetzten Richtungen gestrahlt werden.

2. Vorrichtung zur Laserisotopentrennung nach Anspruch 1, dadurch gekennzeichnet, daß das Ionisationsmittel einen dritten, von dem Lichtpumpmittel gepumpten Laser umfaßt.

3. Vorrichtung zur Laserisotopentrennung nach Anspruch 1 oder 2, dadurch gekennzeichnet, daß sie einen weiteren Ringfarblaser mit einer schmäleren Linienbreite als die Isotopieverschiebung zwischen den in der Substanz enthaltenen Isotopen beinhaltet, derart, daß Licht von dem Ringfarblaser durch einen der beiden oder mehreren Laser verstärkt wird und daß dieses Licht als das Laserlicht mit der ersten oder zweiten Wellenlänge mittels Konvertieren oder ohne Konvertieren der Wellenlänge durch den nichtlinearen optischen Effekt verwendet wird, wobei die Isotope mit unterschiedlichen Massenzahlen getrennt werden.

4. Vorrichtung zur Laserisotopentrennung nach einem der Ansprüche 1 bis 2, dadurch gekennzeichnet, daß die die Isotope enthaltende Substanz Palladium ist, und daß das Laserlicht mit der zweiten Wellenlänge auch als Laserlicht mit der dritten Wellenlänge dient.

5. Vorrichtung zur Laserisotopentrennung nach Anspruch 4, dadurch gekennzeichnet, daß das Lichtpumpmittel ein pulsbetriebener YAG-Laser ist, der Licht mit einer Wellenlänge von 1064 nm emittiert, wobei der erste Laser durch Konvertieren der Wellenlänge auf 1/2, nämlich auf 532 nm, mittels eines nichtlinearen optischen Elementes gepumpt wird, daß das Licht mit einer Wellenlänge von 552,6 nm von dem ersten Laser oszilliert wird, und daß dieses Licht als das Laserlicht mit der ersten Wellenlänge durch Konvertieren des Lichtes auf seine halbe Wellenlänge, nämlich auf 276,3 nm, mittels des nichtlinearen optischen Effektes verwendet wird, daß der zweite Laser durch Konvertieren des Laserlichtes von dem pulsbetriebenen YAG-Lasers auf 1/3 seiner Wellenlänge, nämlich auf 355 nm, mittels eines nichtlinearen optischen Elementes gepumpt wird, daß das Licht mit der Wellenlänge von 521 nm von dem zweiten Laser oszilliert wird, und daß dieses Licht als das Laserlicht mit der zweiten und dritten Wellenlänge verwendet wird.

6. Vorrichtung zur Laserisotopentrennung nach einem der Ansprüche 1 bis 3, worin die die Isotope enthaltende Substanz Mg, Ca, Zn, Sr, Cd, Ba, Hg, Yb, C, Ge, Sn, Sm, Pb, Pu ist.

## Revendications

1. Appareil de séparation des isotopes par laser, comprenant :
des moyens de gazéification pour gazéifier une substance contenant des isotopes, des moyens de pompage de lumière (5) pour pomper au moins deux lasers différents (6,10),
un premier moyen d'excitation (6) procurant une lumière laser irradiée d'une première longueur d'onde pour exciter les isotopes à un premier niveau excité,
un deuxième moyen d'excitation (10) procurant une lumière laser irradiée d'une deuxième longueur d'onde pour exciter les isotopes se trouvant au premier niveau excité à un deuxième niveau excité,
un premier et un deuxième convertisseur de polarisation circulaire (9,11), dans lesquels la lumière laser de la première longueur d'onde est convertie par le premier convertisseur de polarisation circulaire en une lumière polarisée circulairement et ayant un premier chemin optique, et la lumière laser de la deuxième longueur d'onde ayant un deuxième chemin optique est convertie par le premier convertisseur de polarisation circulaire en une lumière polarisée circulairement,
des moyens de circuit optique (12) pour retarder la lumière laser polarisée circulairement dans au moins l'un du premier et du deuxième trajet optique, de telle sorte que les premier et deuxième trajets optiques soient amenés à la même longueur,
des moyens de séparation pour séparer les isotopes ionisés des isotopes neutres, ces moyens de séparation comprenant des électrodes soumises à un champ électromagnétique,
caractérisé en ce qu'il contient, pour être utilisé pour séparer des isotopes dans lesquels le déplacement isotopique est égal ou inférieur à la largeur de raie de la lumière laser,
des moyens d'ionisation procurant une lumière laser irradiée d'une troisième longueur d'onde pour ioniser des isotopes sélectionnés au deuxième niveau excité,
des moyens de conversion d'ondes pour produire un effet d'optique non-linéaire pour convertir la longueur d'onde d'une lumière d'au moins l'un des lasers (6,10) et des moyens pour faire que la première lumière laser polarisée circulairement et la deuxième lumière laser polarisée circulairement irradient la substance gazéifiée depuis des directions opposées.

2. Appareil de séparation d'isotopes par laser selon la revendication 1, caractérisé en ce que les moyens d'ionisation comprennent un troisième laser pompé par lesdits moyens de pompage de lumière.

3. Appareil de séparation d'isotopes par laser selon la revendication 1 ou la revendication 2, caractérisé en ce qu'il comprend un autre laser à colorant annulaire, ayant une largeur de raie plus étroite qu'un déplacement isotopique entre les isotopes contenus dans cette substance, de telle sorte que la lumière en provenance de ce laser à colorant annulaire est amplifiée par l'un de ces deux ou plusieurs lasers et que cette lumière est utilisée comme lumière laser avec la première ou la deuxième longueur d'onde par conversion ou sans conversion de la longueur d'onde par un effet d'optique non-linéaire, d'où il résulte que les isotopes ayant des nombres de masse différents sont séparés.

4. Appareil de séparation des isotopes par laser selon l'une des revendications 1 ou 2, caractérisé en ce que la substance contenant les isotopes est le palladium et que la lumière laser avec la deuxième longueur d'onde sert également de lumière laser avec la troisième longueur d'onde.

5. Appareil de séparation des isotopes par laser selon la revendication 4, caractérisé en ce que les moyens de pompage de lumière sont un laser YAG à fonctionnement pulsatoire émettant la lumière avec une longueur d'onde de 1064 nm, d'où il résulte que le premier laser est pompé en convertissant la longueur d'onde à sa moitié, c'est-à-dire à 532 nm, par un élément d'optique non-linéaire, la lumière avec la lumière d'onde de 552,6 nm est mise en oscillation depuis le premier laser et cette lumière est utilisée comme lumière laser avec la première longueur d'onde en convertissant la lumière à la moitié de sa longueur d'onde, c'est-à-dire à 276,3 nm, par un effet d'optique non-linéaire, le deuxième laser est pompé en convertissant la lumière laser en provenance du laser YAG à fonctionnement pulsatoire à 1/3 de la longueur d'onde, c'est-à-dire à 355 nm, par un élément d'optique non-linéaire, et la lumière avec la longueur d'onde de 521 nm est mise en oscillation depuis le deuxième laser et la lumière est utilisée comme lumière laser avec les deuxième et troisième longueurs d'onde.

6. Appareil de séparation des isotopes par laser selon l'une des revendications 1 à 3, dans lequel la substance contenant les isotopes est Mg, Ca, Zn, Sr, Cd, Ba, Hg, Yb, C, Ge, Sn, Sm, Pb, Pu.
